# EUROPEAN PATENT APPLICATION

(11) **EP 4 827 122 A1**
(43) Date of publication of application: **21.10.2026**
(21) Application number: 25171308.7
(22) Date of filing: 17.04.2025
(51) Int. Cl.: H04W 4/02, G06N 20/00, H04L 67/12, H04W 4/40

(54) **METHOD AND SYSTEM FOR A DISTANCE AND ORIENTATION AWARE AGENT-TO-AGENT COMMUNICATION**

(71) Applicant: Bayerische Motoren Werke Aktiengesellschaft, 80809 München (DE)
(72) Inventor: Mantovani, Francesco, San Francisco, CA, 94158 (US); Dos Santos Salgueiro, Pascal, San Francisco, CA, 94102 (US); Heijboer, Stefan, Mountain View, CA, 94041 (US)

(57) **Abstract**

The invention relates to a method for a distance (200) and orientation (202) aware agent-to-agent communication between a first machine learning model (204) of a smart edge device (206) of a user and a second machine learning model (208) of a vehicle (210) associated with the user for aiding the user to resolve a user task associated with the vehicle (210), the method comprising the steps of: providing an established wireless communication link (212) between the smart edge device (206) and the vehicle (210); acquiring a distance (200) between the smart edge device (206) and the vehicle (210) and an orientation (202) of the smart edge device (206) with respect to the vehicle (210) using the established wireless communication link (212); and establishing the agent-to-agent communication between the first machine learning model (204) and the second machine learning model (208) based on the acquired distance (200) and orientation (202) for aiding the user to resolve the user task associated with the vehicle (210).

## Description

The present disclosure relates to the field of intelligent vehicular systems and the integration of personal electronic consumer devices within automotive environments. In particular, the present invention relates to a method and system for a distance and orientation aware agent-to-agent communication between a first machine learning model of a smart edge device of a user and a second machine learning model of a vehicle associated with the user for aiding the user to resolve a user task associated with the vehicle.

In future mobility scenarios, it is expected that users will increasingly bring their own smart devices into vehicles, a trend commonly referred to as Bring Your Own Device (BYOD). These devices may include smartphones, wearables, smart glasses, smart pendants, smart pins, and smart rings. Equipped with digital personal assistants such as Alexa, these devices enable multimodal interactions with their ecosystem and offer the ability to sense user context, interface with external systems, and generate responses or actions on behalf of the user.

A vision for future vehicles is the seamless and intelligent interaction between these BYODs and the in-vehicle systems, enabling new levels of personalization, convenience, and automation. Within this context, large language models (LLMs) are playing a growing role, particularly in agent-to-agent (A2A) communication. LLMs are capable of interpreting multimodal contextual inputs, such as speech and visual data, and exchanging information in structured formats like JSON, textual representation and/or vector embeddings.

However, current A2A communications are limited by their lack of contextual integration with the underlying communication technologies themselves. While two LLMs may exchange data, the communication protocol does not yet account for contextual metadata derived from the method of communication, such as proximity, directionality, or connection strength, which limits the depth and intelligence of the interaction. For instance, while a vehicle assistant may be able to ask a BYOD assistant about the user's visual input, it currently lacks awareness of the spatial relation between the device and the car. This illustrates a broader challenge in enabling truly context-aware and dynamic interoperability between distributed intelligent agents within connected mobility ecosystems.

In addition to the ability to detect and communicate with nearby devices, modern vehicles are equipped with advanced geolocation and orientation technologies. The vehicle integrates GPS/GNSS systems and connects to the internet via cellular networks, allowing it to provide precise global positioning data in the WGS84 coordinate system. This geolocation data is further enhanced by orientation information obtained through onboard magnetometers, resulting in a complete vehicle pose that conforms to the ISO S855 vehicle coordinate system. This pose data is transmitted to a cloud-based service, which maintains a record of the vehicle's last known position and orientation. Edge devices, such as smartphones or wearables, possess similar geolocation and connectivity capabilities, enabling them to calculate their own pose in the same global reference space. Through cellular connectivity, these devices can access the cloud service to retrieve the current pose of the vehicle and, based on both poses, determine their spatial relation to the vehicle within the shared WGS84 coordinate system.

To further refine localization, the vehicle includes ultra-wideband (UWB) technology, offering a ranging service via multiple UWB anchors. Edge devices equipped with UWB can connect to the vehicle's UWB access point. The vehicle then determines the relative position of the device within its own coordinate system and transmits this information back to the device. However, due to the edge device typically having only a single UWB antenna, its position can only be resolved relative to the vehicle's origin. Consequently, the device must also retrieve the vehicle's full pose to accurately determine its own global pose in space. This integration of data allows for precise spatial awareness in dynamic vehicular environments.

To assist the edge device in recognizing and tracking the vehicle visually, the vehicle can transmit additional identifying information through either the cloud backend or the UWB connection. These visual arguments may include a 3D model of the vehicle, a set of descriptive vehicle parameters, or an image of the vehicle. The edge device, equipped with RGB and/or LiDAR sensors, utilizes this data to identify and track the vehicle in real time using RGB tracking or multimodal AI algorithms. The identification process may rely on visual features such as license plate information, vehicle make, model, and color, or high-fidelity representations like CAD models and a list of geometric anchor points. Through this combination of localization, orientation, and visual identification, a robust framework is established for intelligent spatial interaction between personal edge devices and connected vehicles.

Against this background, the object of the present invention is to provide an improved method and system, especially for agent-to-agent (A2A) communication in a vehicle environment.

This task is solved by the objects of the independent claims. Advantageous embodiments of the invention are given in the subclaims.

The invention relates to a method for a distance and orientation aware agent-to-agent communication between a first machine learning model of a smart edge device of a user and a second machine learning model of a vehicle associated with the user for aiding the user to resolve a user task associated with the vehicle, the method comprising the steps of: providing an established wireless communication link between the smart edge device and the vehicle; acquiring a distance between the smart edge device and the vehicle and an orientation of the smart edge device with respect to the vehicle using the established wireless communication link; and establishing the agent-to-agent communication between the first machine learning model and the second machine learning model based on the acquired distance and orientation for aiding the user to resolve the user task associated with the vehicle.

The invention also includes a system for a distance and orientation aware agent-to-agent communication between a first machine learning model of a smart edge device of a user and a second machine learning model of a vehicle associated with the user for aiding the user to resolve a user task associated with the vehicle, the system comprising the smart edge device, the vehicle, a vehicle backend server connectable to the vehicle and the smart edge device and a control unit, wherein the smart edge device and the vehicle are connectable via the vehicle backend server via an established wireless communication link; wherein the control unit is configured for acquiring a distance between the smart edge device and the vehicle and an orientation of the smart edge device with respect to the vehicle using the established wireless communication link; and for establishing the agent-to-agent communication between the first machine learning model and the second machine learning model based on the acquired distance and orientation for aiding the user to resolve the user task associated with the vehicle.

The embodiments and features described for the method apply to the system, respectively, and vice versa.

Agent-to-agent communication preferably refers to the exchange of data, commands, or contextual information between two intelligent systems, such as digital assistants or machine learning agents, each operating on separate devices. This communication is preferably structured using standardized formats like JSON or vector embeddings and allows the agents to collaborate, share insights, and coordinate actions across devices and platforms.

The first machine learning model of a smart edge device preferably resides locally on a personal electronic device such as a smartphone, wearable, or smart accessory or in a cloud or a server accessible by the smart edge device. This first machine learning model is preferably optimized for real-time inference and multimodal processing, enabling the device to interpret user input, perceive its surroundings, and make context-aware decisions based on audio, visual, and/or spatial data.

The second machine learning model of a vehicle preferably runs on the vehicle's embedded computing platform or backend-connected systems and is trained to understand vehicle-specific context. This second machine learning model preferably processes sensor data from the vehicle environment, including GPS, magnetometer, UWB, and internal vehicle signals, and can interact with other agents or services to support intelligent driving assistance, localization, or user personalization features.

An established wireless communication link preferably refers to an active and authenticated connection between two devices using short-range or long-range wireless technologies, such as Bluetooth, Wi-Fi, cellular, or UWB. This link preferably enables the reliable and secure transfer of data necessary for agent-to-agent interactions, device localization, and access to cloud-based services.

Distance and orientation can preferably be structured as a vectorized representation to enable efficient and interpretable communication between two intelligent systems. Preferably, the relative position between the smart edge device and the vehicle is expressed as a three-dimensional translation vector, capturing the spatial offset along the x, y, and z axes in a shared coordinate system such as WGS84 or a local vehicle frame. This vector preferably takes the form [Δx, Δy, Δz], where each component corresponds to a directional difference in space. Orientation is preferably encoded using quaternions, Euler angles, or rotation matrices, with quaternions being the preferred method due to their stability and ability to represent 3D rotations without singularities. Preferably, both translation and rotation are combined into a single pose vector, such as [Δx, Δy, Δz, q₀, q₁, q₂, q₃], which jointly describes the relative location and orientation of one system with respect to the other. This pose vector can preferably be extended with additional metadata such as the magnitude of the distance, confidence scores for localization accuracy, and timestamps to synchronize temporal alignment between systems. Preferably, structuring distance and orientation in this vectorized form allows both machine learning models to reason about spatial relationships in a standardized, compact, and machine-readable way, facilitating context-aware decision-making and enabling spatial intelligence in agent-to-agent communication.

Using distance and orientation information in the communication between the two machine learning models, such as one on a smart edge device and one in a vehicle, offers several advantages that enhance context-awareness, personalization, and interaction quality. Firstly, it preferably enables spatially contextualized decision-making. When both models are aware not only of each other's presence but also of their relative positions and orientations, they can interpret data and user intent more precisely. For example, an edge device can understand whether it is approaching the vehicle, inside it, or walking away from it, and the vehicle can adjust its behavior accordingly. Secondly, it allows for dynamic adaptation of services and user interfaces. Based on the orientation and distance, the system can trigger specific actions or restrict functionalities. For instance, unlocking the vehicle, adjusting in-car settings, or launching handover processes between digital assistants can be made dependent on proximity and relative direction, reducing false activations and enhancing security. Thirdly, it strengthens multimodal interaction by enabling disambiguation of inputs. In environments where multiple users and devices are present, relative position and orientation help identify which device belongs to which user and where that user is located, allowing the models to focus their responses appropriately. Moreover, it improves the accuracy of visual and spatial tracking. If an edge device is trying to track the vehicle visually (e.g., for valet services, navigation, or augmented reality), having access to real-time orientation and distance data allows its machine learning model to align sensor inputs with expected physical positioning, boosting tracking robustness. Also, it supports resource optimization. Communication protocols, data synchronization intervals, and AI inference frequency can be adapted based on proximity, minimizing power and bandwidth consumption while maintaining responsiveness.

Preferably, there is presently provided a method for guiding a user to his vehicle, which may require a smart edge device (also: smart user device) to understand the vehicles' location relative to its own / user. There are several technologies allowing for such a location calculation. Most of them are restricted in some way or form. For optimal results in most scenarios, a layered approach may be recommended, as it increases accuracy of the system, the closer the user gets to the vehicle. If the user is out of range for any ranging types of use cases, the smart edge device may localize the vehicle purely based on its geolocation. This is typically not accurate but may be sufficient to guide the user in the correct direction with respect to the vehicle. Once the user is close enough to the vehicle to connect to an ultra-wide band (UWB) ranging service, which may be in a proximity of the user around the vehicle of about 20 meters or more, the accuracy can be increased significantly. In other words, the UWB ranging may be used as soon as available to the smart edge device. The availability may be defined by the predetermined threshold. Thus, of course, the available distance may be significantly more or less than 20 meters depending on a signal strength of the UWB. This may allow precise guidance to the vehicle and may also provide an understanding of the user's angle of approach relative to the vehicle. Once the user has a clear visual of the vehicle that is about to be approached, the accuracy can be further increased by using visual tracking on the smart edge device of the user. Thereby, the vehicle may provide the relevant information to perform this tracking. This allows for a pinpoint accuracy.

Also, there may be provided a method suitable for communication for a multi-device environment, in which at least two or more digital personal assistants, preferably including a vehicle-own assistant, can identify themselves, exchange data, interact with each other and/or mediate on what is best for a user, and/or perform tasks and/or actions. Accordingly, it is preferable that a device is able to communicate to the vehicle agent-to-agent (A2A) service. Therefore, it may also be preferable that the vehicle agent has access to vehicle-specific information, such as but not limited to, vehicle model, vehicle driving statistics, etc. The vehicle assistant preferably identifies whether the user is the owner of the vehicle. This may be performed by a vehicle identification (ID) and/or by a camera, i.e. via face and/or gesture recognition, and/or by fingerprinting.

Also, it is preferable that the vehicle assistant and the Bring Your Own Device (BYOD) assistant each identify that they share the same owner through the vehicle ID and establish a secure connection that allows proximity, exact location, etc. via ultra-wide band (UWB) and/or BT.

In another aspect of the invention the first machine learning model consults the second machine learning model for aiding the user to resolve the user task associated with the vehicle in case that first meta information, in particular first sensor data of the vehicle, is available to the second machine learning model, which first meta information aids the first machine learning model to resolve the user task associated with the vehicle, and/or wherein the second machine learning model consults the first machine learning model for aiding the user to resolve the user task associated with the vehicle in case that second meta information, in particular second sensor data, is available to the first machine learning model, which second meta information aids the second machine learning model to resolve the user task associated with the vehicle.

The feature that the first machine learning model consults the second machine learning model preferably refers to a bidirectional collaboration between two intelligent agents, one located on a smart edge device and the other within the vehicle system. Preferably, this collaboration takes place when the second machine learning model has access to certain meta information, particularly sensor data from the vehicle, that is not available to the edge device itself. Meta information preferably denotes contextual data that describes the state or environment of the system, such as position, velocity, temperature, user proximity, or interior conditions, which can be used to enhance machine learning predictions or decisions. Sensor data of the vehicle preferably includes inputs from GPS, UWB, cameras, accelerometers, magnetometers, or internal vehicle systems such as the CAN bus. The advantage of such a consultation mechanism is that it allows the edge device's model to enhance its understanding of the user context by incorporating data that would otherwise be unavailable due to hardware or access limitations. Conversely, the second machine learning model located in the vehicle preferably initiates a consultation with the first model when meta information, especially sensor data captured by the edge device such as LiDAR, RGB images, or environmental audio, is useful to complete a user-related task. This bidirectional support architecture preferably enables both agents to dynamically compensate for gaps in local data availability, leading to improved decision accuracy, user support, and robustness of the overall system. Preferably, the phrase "associated with the vehicle" indicates that the user task has a spatial or functional relationship to the car, such as locating the vehicle, unlocking it, identifying its surroundings, or managing in-vehicle systems, as examples. The consultative interaction between the models preferably takes the form of data requests, inference support, or query answering, either via cloud services or local wireless connections, depending on availability and latency requirements. The technical advantage lies in the distributed intelligence across edge and vehicle, enabling context-aware problem-solving even in cases where individual agents operate under partial observability.

In another aspect of the invention the user task associated with the vehicle considers a user-specific question to be answered to the user about the vehicle and/or about a vehicle function executable based on the user task and/or about a part of the vehicle and/or about an action performable with the vehicle and/or the part of the vehicle and/or about an item and/or an object and/or a subject of interest to the user with relation to the vehicle and/or about a state of the vehicle and/or the part of the vehicle and/or the item and/or the object and/or the subject, and/or wherein the user task associated with the vehicle considers a user-specific instruction of the user to be executed for the user about the vehicle and/or about a vehicle function executable based on the user task and/or about a part of the vehicle and/or about an action performable with the vehicle and/or the part of the vehicle and/or about an item and/or an object and/or a subject of interest to the user with relation to the vehicle and/or about a state of the vehicle and/or the part of the vehicle and/or the item and/or the object and/or the subject.

The user task associated with the vehicle preferably refers to a context-sensitive interaction initiated by or on behalf of the user, in which personalized information or control actions are required in relation to the vehicle system. Preferably, the user task involves a user-specific question, which may relate to the current status of the vehicle, such as battery level, tire pressure, door and/or window lock state, or ongoing diagnostics. This question preferably targets either the vehicle as a whole, individual components of the vehicle, or objects and subjects that are spatially or functionally related to the vehicle, including external items or people in proximity. Alternatively or additionally, the task may involve a user instruction, such as a command to perform a function like opening the trunk, starting climate control, or locating a vehicle component visually or spatially. Preferably, the instruction is processed through the smart edge device or the vehicle system, depending on which system has the required capabilities or context. The term "user-specific" preferably implies that the interaction is tailored based on user identity, preferences, or location, providing a higher degree of personalization and contextual relevance. The technical advantage lies in enabling complex, multimodal, and intent-aware interactions between the user and the vehicle ecosystem, improving usability and supporting intelligent assistant behavior.

In another aspect of the invention the acquiring the distance between the smart edge device and the vehicle using the established wireless communication link is done based on a cellular connection of the smart edge device and the vehicle and based on a geolocation of the vehicle in case the distance is above a predefined threshold, preferably greater than approximately 20 meters, wherein the orientation of the smart edge device with respect to the vehicle is determined based on vehicle heading information communicated to the smart edge device via the cellular connection, and orientation information of the smart edge device.

Based on a geolocation of the vehicle, the orientation of the smart edge device is preferably determined by using vehicle heading information as a directional reference. Preferably, the geolocation is expressed in a global coordinate frame such as WGS84 and retrieved via GPS or GNSS sensors integrated into the vehicle system. The vehicle heading information preferably indicates the directional orientation of the vehicle with respect to true north or a predefined axis and is derived from magnetometer or inertial sensor data. Preferably, by comparing the position and pose of the edge device to the geolocation and heading of the vehicle, the relative orientation of the user device can be computed in the shared spatial frame. This orientation preferably includes the direction the user is facing in relation to the front or side of the vehicle. The technical advantage is that this enables context-sensitive visual or auditory feedback, directional commands, or augmented reality overlays aligned with the vehicle's real-world pose.

In another aspect of the invention the acquiring the distance between the smart edge device and the vehicle using the established wireless communication link is done based on a Bluetooth connection and an ultra-wide band connection between the smart edge device and the vehicle in case the distance is equal to or below a predefined threshold, preferably equal to or lower than approximately 20 meters, wherein the orientation of the smart edge device with respect to the vehicle is determined based on vehicle heading information, communicated to the smart edge device via the Bluetooth connection, and orientation information of the smart edge device.

Based on a Bluetooth connection and an ultra-wideband (UWB) connection between the smart edge device and the vehicle, the orientation of the smart edge device is preferably derived by using vehicle heading information as a directional anchor. Preferably, the Bluetooth connection provides continuous low-bandwidth communication and proximity awareness, while the UWB connection offers high-precision distance and spatial localization capabilities. Preferably, UWB allows the vehicle to calculate the relative position of the edge device using ranging algorithms, while the heading data from the vehicle provides the frame of reference for determining orientation. This results in a more accurate calculation of how the edge device is spatially aligned with the vehicle. The technical advantage is that UWB-enhanced orientation estimation significantly improves interaction fidelity, such as enabling directional voice assistance or spatial commands that depend on where the user is positioned relative to the car.

In another aspect of the invention the acquiring the distance between the smart edge device and the vehicle using the established wireless communication link is done based on using visual tracking information of the vehicle on the smart edge device in case the vehicle is in sight of the user wearing the smart edge device, wherein the orientation of the smart edge device with respect to the vehicle is determined based on the visual tracking information, preferably optical flow information of a camera of the smart edge device.

Based on using visual tracking information of the vehicle on the smart edge device, the orientation of the smart edge device is preferably determined when the vehicle is visible to the user wearing or holding the device. Preferably, visual tracking refers to real-time computer vision techniques, such as optical flow, object detection, and feature matching, used to recognize and track the vehicle's position and orientation in the device's camera feed. Optical flow preferably describes the pattern of apparent motion of vehicle features across successive frames, allowing for estimation of both relative motion and orientation. When the edge device processes this visual information, it can preferably estimate its own viewing angle and spatial alignment relative to the vehicle, enabling intuitive spatial interactions. The technical advantage is that this approach does not rely on additional hardware sensors and functions in visually rich environments, supporting natural user experiences such as pointing at the car to trigger specific functions or overlaying augmented information aligned with the vehicle's geometry.

In another aspect of the invention the smart edge device performs the acquiring the distance between the smart edge device and the vehicle and depending thereon, the orientation of the smart edge device with respect to the vehicle, in a multi layered approach that depends on the actual distance between the smart edge device and the vehicle.

In the present case, a multi-layer approach for the vehicle localization is performed. In general, guiding a user to his vehicle or a predefined vehicle of interest requires a smart edge device to understand the vehicles' location relative to its own. There are several technologies allowing for such a calculation. Most of them are restricted in some way or form. For optimal results in most scenarios, according to the present invention, the multi-layered approach is used. Increasing the accuracy of the system for localization, the closer the user gets to the vehicle. If the user is out of range for any ranging types of use cases, the smart edge device will preferably localize the vehicle purely based on its geolocation. This is preferably not very accurate, but sufficient to guide the user in the correct direction. Once the user is close enough to the vehicle to connect to a UWB ranging service, preferably roughly 20 meters, the accuracy can be increased. This allows a precise guidance to the vehicle and also a good understanding on the user's angle of approach with respect to the vehicle. Once the user has a clear visual, the accuracy may be further increased by using visual tracking on the smart edge device. The vehicle can provide further relevant information to perform this tracking. This allows for a pinpoint accuracy.

In another aspect of the invention the distance acquired based on the geolocation has an accuracy of about 5 meters, and wherein the distance acquired based on the ultra-wide band connection has an accuracy of about or lower than 10 centimeters, and wherein the distance acquired based on the visual tracking information has an accuracy of about or lower than 1 centimeter.

Distance acquired based on geolocation preferably refers to the calculation of spatial separation between two entities, such as a vehicle and a smart edge device, using global positioning data, which typically achieves an accuracy of about 5 meters under standard conditions. Preferably, this level of accuracy is sufficient for coarse localization tasks such as vehicle finding within open areas or providing directional guidance. In contrast, distance acquired via ultra-wideband (UWB) connection preferably allows for much higher precision, with an accuracy of about or lower than 10 centimeters, due to its ability to perform time-of-flight ranging based on high-frequency pulse signals. This UWB-based measurement preferably supports near-field interactions such as unlocking the car when a user is in immediate proximity. Distance acquired using visual tracking information preferably yields even finer precision, typically down to 1 centimeter or less, by leveraging computer vision techniques such as object detection, optical flow, or feature matching in real time. This method preferably enables high-resolution spatial positioning in scenarios like augmented reality overlays or gesture-based control.

In another aspect of the invention the first machine learning model comprises a language model or a vision language model or an audio language model or an audio vision language model or a multimodal model or a physics informed language model and/or wherein the second machine learning model comprises a language model or a vision language model or an audio language model or an audio vision language model or a multimodal model or a physics informed language model.

The first machine learning model preferably includes advanced architectures such as language models, vision-language models, audio-language models, audio-vision-language models, multimodal models, or physics-informed language models. Preferably, a language model is trained to understand and generate human language based on large-scale textual data, enabling it to process spoken or written queries. A vision-language model preferably integrates image understanding with textual interpretation, allowing the system to comprehend visual scenes and relate them to language input. An audio-language model preferably processes spoken input or environmental sounds in conjunction with natural language understanding. A multimodal model preferably fuses multiple sensor modalities, such as text, vision, and audio, into a unified understanding, allowing it to respond to complex, real-world inputs. A physics-informed language model preferably incorporates physical constraints or simulation knowledge into its reasoning process, enabling more grounded interpretations of spatial and motion-related queries. The same architecture types are preferably also used in the second machine learning model, enabling coherent interaction across agents. The technical advantage of using such models lies in their ability to handle complex, multimodal user tasks while adapting to both abstract commands and real-world context.

In another aspect of the invention the method further comprising, at least by the second machine learning model, identifying whether the user is an owner of the vehicle using information about a vehicle identification and/or camera information, preferably face-recognition information and/or gesture recognition information, and/or fingerprint information, and wherein the establishing the agent-to-agent communication between the first machine learning model and the second machine learning model is also based on whether the user is the owner of the vehicle.

Identifying whether the user is the owner of the vehicle is preferably performed by the second machine learning model using various identity-related information. Preferably, this includes vehicle identification, which refers to unique identifiers such as vehicle ID or license plate, and camera information for recognizing the user visually. Preferably, face recognition technology is employed to match the user's facial features to a known profile stored in the system. Additionally or alternatively, gesture recognition and fingerprint scanning may be used for multimodal identity verification. These methods preferably allow for secure and user-friendly access control to vehicle functions. Establishing agent-to-agent communication between the first and second machine learning models is preferably made conditional upon verifying that the user is the authorized owner. This approach preferably enhances data security and privacy by ensuring that sensitive interactions or commands can only be executed by legitimate users. The technical advantage is a robust authentication mechanism that supports personalized services while preventing unauthorized access.

In another aspect of the invention the smart edge device comprises a smart phone and/or a wearable and/or a smart glass and/or a smart pendant and/or a smart pin and/or a smart ring.

A smartphone preferably provides a versatile platform with multimodal sensing, computing, and connectivity features. Wearables such as smartwatches or fitness trackers preferably offer continuous context sensing and are often worn on the body for proximity awareness. Smart glasses preferably provide visual feedback and augmented reality capabilities through integrated displays and cameras. A smart pendant, smart pin, or smart ring preferably represents compact form factors worn on the user that support subtle gesture input, haptic feedback, or identity recognition. These devices preferably serve as mobile nodes in the user's personal computing ecosystem, allowing seamless interaction with the vehicle system.

In another aspect of the invention the control unit is included in the vehicle backend server, and wherein the vehicle backend server is preferably configured as a cloud service.

The control unit is preferably located in the vehicle backend server, which is preferably configured as a cloud-based service. The vehicle backend server preferably acts as a remote processing and storage unit that manages vehicle data, machine learning models, and communication services. Preferably, the control unit coordinates logic between the edge device and the vehicle's onboard systems, while leveraging cloud infrastructure for scalability, remote updates, and high-performance computing. Configuring the backend as a cloud service preferably allows for centralized data management, real-time synchronization, and remote diagnostics. The technical advantage is a scalable and maintainable architecture that supports distributed intelligence and consistent user experiences across different vehicles and edge devices.

The invention also includes a computer program product comprising instructions which, when the method is executed by a computer, cause the computer to execute the method.

The invention also comprises a computer-readable medium on which the computer program product is stored.

An example use case for the presented method may be explained by the following: A user asks a question like: "Will this bike fit in this car?". Correspondingly, the owner / user of the vehicle will look at the bike standing in front of the trunk of his vehicle. A smart user device, such as smart glasses, may then take a snapshot of the bike and liaisons with the vehicle's assistant about the estimated and/or predetermined dimensions of the bike and the known dimensions of the trunk of the vehicle. Then, the smart user device may let the owner / user know the outcome of the assessment and may provide the user with a potential and/or possible bike position, i.e., by use of augmented reality.

A further use case for the presented method may be explained by the following: A user says: "Close this window!". The owner / user may sit in the vehicle and may look at a particular window intended to be closed. Maybe, an in-vehicle camera cannot identify the gaze of the owner and may ask a smart user device (e.g., a smart glass) to identify a direction of the gaze of the user. The smart user device may subsequently determine the gaze direction and may communicate it to the vehicle's assistant. The vehicle's assistant may then cause the vehicle window to be closed automatically.

An example use case for the presented method may be explained by the following: A user asks a question like "Will this bike fit in one of these cars?". For example, the owner / user may possess two or more vehicles. A smart user device may then need to determine which vehicle to pick so it will liaison with the respective vehicles for proximity reasons, e.g. by asking an itself a question like: "Am I standing next to the vehicle model 1 or vehicle model 2?". If it is subsequently determined that the bike in question does not fit in the vehicle nearby the user, the smart device may then propose and/or assess another one of the at least two vehicles of the user, in which the bike in question may fit.

The term "vehicle" includes any system for the transportation of people and goods on roads, e.g. cars, trucks, buses, motorhomes, motorcycles, on rails, on water or in the air. The vehicle can be powered by a combustion engine, a hybrid drive or a purely electric drive. Public or private charging stations can use the procedure.

Examples of embodiments of the invention are shown in the figures and are described in more detail below. In the following, unless otherwise specified, the same reference signs are used for identical and similarly acting elements.

It shows:
- Figure 1: a schematic flow chart of an embodiment of the claimed method,
- Figure 2: a schematic chart showing a multi-layered localization approach,
- Figure 3: a schematic view of an embodiment of the claimed system,
- Figure 4: a further schematic view of an embodiment of the claimed system,
- Figure 5: exemplified flowcharts of embodiments of the claimed method, and
- Figure 6: a further exemplified flowchart of an embodiment of the claimed method.

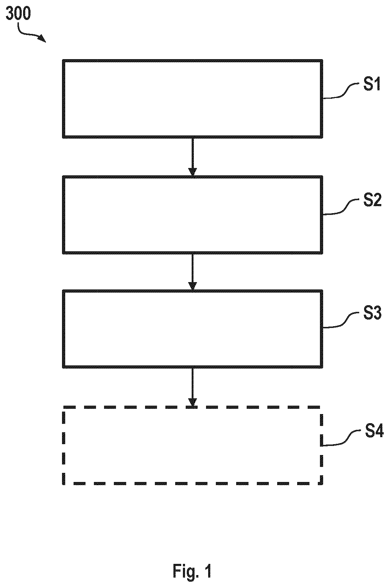

In Figure 1, the method according to the invention is illustrated in a first embodiment. The method is configured for a distance 200 and orientation 202 aware agent-to-agent communication between a first machine learning model 204 of a smart edge device 206 of a user and a second machine learning model 208 of a vehicle 210 associated with the user for aiding the user to resolve a user task associated with the vehicle 210. The method comprising the step of providing S1 an established wireless communication link 212 between the smart edge device 206 and the vehicle 210. In a step S2, the method comprises acquiring the distance 200 between the smart edge device 206 and the vehicle 210 and the orientation 202 of the smart edge device 206 with respect to the vehicle 210 using the established wireless communication link 212. In a step S3, the method comprises establishing the agent-to-agent communication between the first machine learning model 204 and the second machine learning model 208 based on the acquired distance 200 and orientation 202 for aiding the user to resolve the user task associated with the vehicle 210. In an optional method step, the method may further comprise, at least by the second machine learning model 208, identifying whether the user is an owner of the vehicle 210 using information about a vehicle identification and/or camera information, preferably face-recognition information and/or gesture recognition information, and/or fingerprint information, and wherein the establishing the agent-to-agent communication between the first machine learning model 204 and the second machine learning model 208 is also based on whether the user is the owner of the vehicle 210.

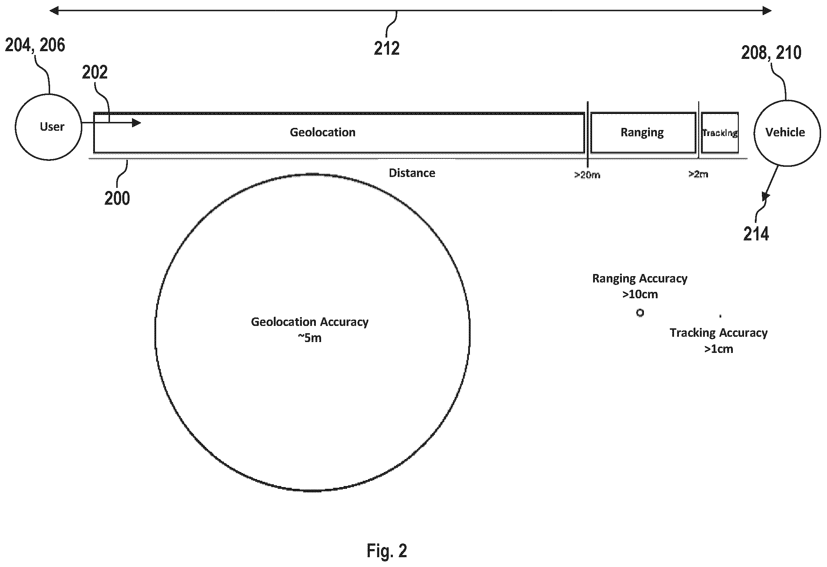

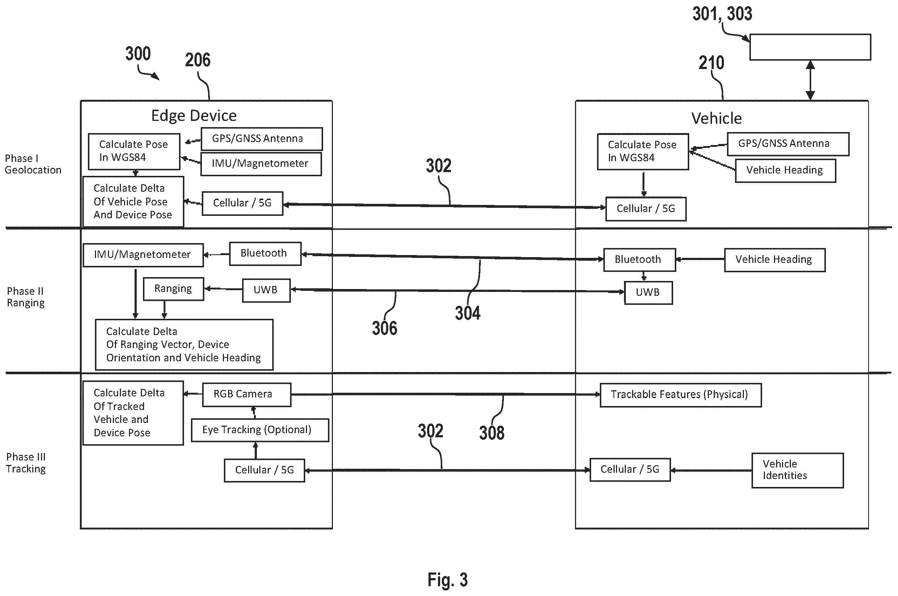

Figure 2 discloses a schematic chart showing a multi-layered localization approach. In general, guiding a user to his vehicle 210 or a predefined vehicle of interest requires the smart edge device 206 to understand the vehicles' location relative to its own. There are several technologies allowing for such a calculation. Most of them are restricted in some way or form. For optimal results in most scenarios, according to the present invention, the multi-layered approach is used. Increasing the accuracy of the system for localization, the closer the user gets to the vehicle 210, as shown schematically in Figure 2. Also, Figure 3 shows in the schematic view of an embodiment of a claimed system 300 this multi-layered localization approach. Therefore, it is also explicitly referred to the Figure 3. The system 300 may also have a backend server 301 and a control unit 303.

Therein the distance 200 between the smart edge device 206 and the vehicle 210 using the established wireless communication link 212 is first done based on a cellular connection of the smart edge device 206 and the vehicle 210 and based on a geolocation of the vehicle 210 in case the distance is above a predefined threshold, preferably greater than approximately 20 meters, wherein the orientation 202 of the smart edge device 206 with respect to the vehicle 210 is determined based on vehicle heading information 214 communicated to the smart edge device 206 via the cellular connection 302, and orientation information of the smart edge device 206. Then, the acquiring S2 the distance 200 between the smart edge device 206 and the vehicle 210 using the established wireless communication link 212 is done based on a Bluetooth connection 304 and an ultra-wide band connection 306 between the smart edge device 206 and the vehicle 210 in case the distance 200 is equal to or below a predefined threshold, preferably equal to or lower than approximately 20 meters, wherein the orientation 202 of the smart edge device 206 with respect to the vehicle 210 is determined based on vehicle heading information 214, communicated to the smart edge device 206 via the Bluetooth connection, and orientation information of the smart edge device 206. After that, i.e. if the user is even closer to the vehicle, the acquiring S2 the distance 200 between the smart edge device 206 and the vehicle 210 using the established wireless communication link 212 is done based on using visual tracking information of the vehicle 210 on the smart edge device 206 in case the vehicle 210 is in sight of the user wearing the smart edge device 206, wherein the orientation 202 of the smart edge device 206 with respect to the vehicle 210 is determined based on the visual tracking information 308, preferably optical flow information of a camera of the smart edge device 206. The distance 200 acquired based on the geolocation has an accuracy of about 5 meters. The distance 200 acquired based on the ultra-wide band connection has an accuracy of about or lower than 10 centimeters. The distance 200 acquired based on the visual tracking information has an accuracy of about or lower than 1 centimeter.

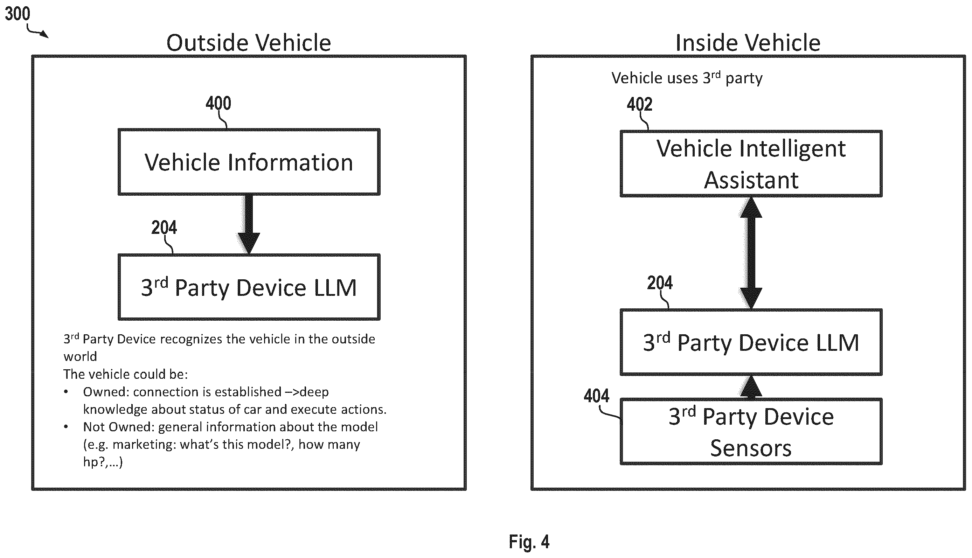

Figure 4 shows a further schematic view of an embodiment of the claimed system 300. Thereby, it may be recognized based on vehicle information 400 that may be communicated to the 3^{rd} party device LLM, i.e. the first machine learning model 204, whether the user is outside the vehicle 210. Thereby, the 3^{rd} party device LLM, i.e. the first machine learning model 204, recognizes the vehicle 210 in the outside world. The vehicle 210 may be owned by the user, and based thereon a connection is established via which deep knowledge about the status of the vehicle 210 can be accessed and maybe vehicle functions can be executed. If the vehicle 210 may not be owned by the user, general information about a model of the vehicle 210, e.g. related to marketing, may be provided to the user. Inside the vehicle 210, a vehicle intelligent assistant 402, i.e. equipped with the second machine learning model 208, may communicate with the 3^{rd} party device LLM, i.e. the first machine learning model 204, which 3^{rd} party device LLM, i.e. the first machine learning model 204, may be provided with 3^{rd} party device sensor information 404.

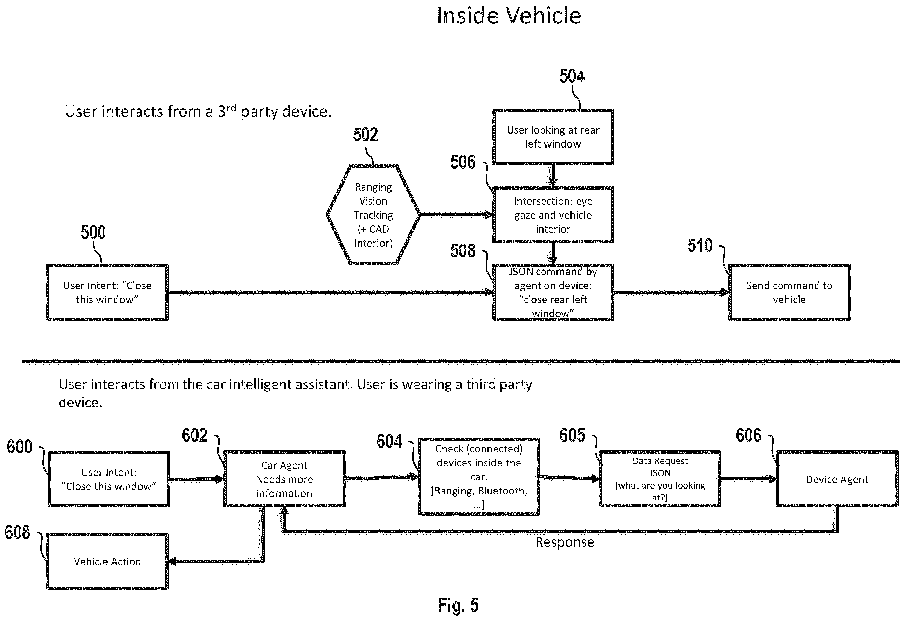

Figure 5 shows exemplified flowcharts of embodiments of the claimed method. In one of the embodiments inside the vehicle 210, the user inputs the user-specific task 500 defined by "close the window". Based on ranging vision tracking 502 by the smart edge device 206, and based on a gaze of the user at the rear left window (marked with 504), an intersection of eye gaze and vehicle interior is calculated, marked with 506. Based thereon, a JSON command by the agent on the edge device 206 is created (marked with 508) specifying "close rear left window". This command is then sent (marked with 510) to the vehicle 210 and the rear left window is closed in response thereto.

Another use case is shown, where the user interacts with the vehicle intelligent assistant 402. Thereby, the user is wearing the smart edge device 206 (third-party device). The user drops a command such as "close this window" (marked with 600). The vehicle intelligent assistant 402 processes that more information is needed to respond to the command (marked with 602). Then further connected devices are considered that may be inside the vehicle 210 and that may be in Bluetooth range (marked with 604). A data request is then transformed in JSON, for example, "what are you looking at?" (marked with 605). Then the device agent 606, i.e. comprising the first machine learning model 204, responds to said question and gives the answer to the car agent 402. Based thereon, the vehicle action can be performed and the window at which the user was looking can be closed (marked as 608).

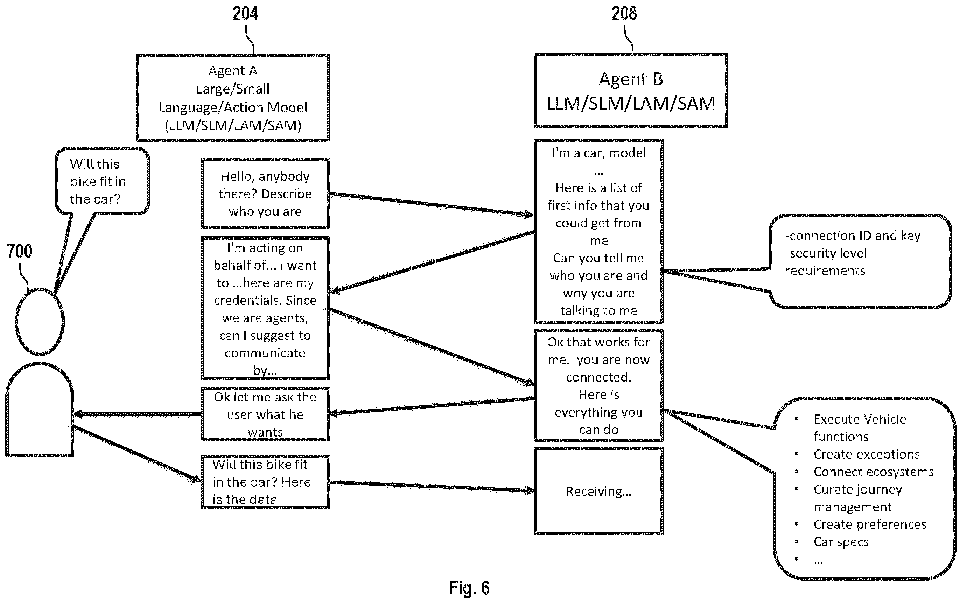

Figure 6 shows an example of a conversation between the first and the second machine learning model 204, 208, preferably both comprising a LLM and/or a SLM and/or a LAM and/or a SAM. The first machine learning model 204 may then ask the second machine learning model 208 "Hello, anybody there? Describe who you are". The second machine learning model 208 may respond "I'm a car, model ...Here is a list of first info that you could get from me. Can you tell me who you are and why you are talking to me". The first machine learning model 204 may react thereto "I'm acting on behalf of... I want to ...here are my credentials. Since we are agents, can I suggest communicating by...". The second machine learning model 208 may react again "Ok that works for me. you are now connected. Here is everything you can do" to the first machine learning model 204. The first machine learning model 204 may then tell "Ok let me ask the user what he wants". The user 700 may ask a question like "Will this bike fit in the car? The first machine learning model 204 will get the response: "Will this bike fit in the car? Here is the data". This response is then received by the second machine learning model 208. The user may also input user-specific tasks related to execute vehicle functions and/or create exceptions and/or connect ecosystems and/or curate journey management and/or create preferences and/or car specifications. The list is not limited thereto.

The features of the invention described with reference to the illustrated embodiments may also be present in other embodiments of the invention, except where otherwise indicated or where prohibited for technical reasons.

### LIST OF REFERENCE NUMERALS

- 200: distance
- 202: orientation
- 204: first machine learning model
- 206: smart edge device
- 208: second machine learning model
- 210: vehicle
- 212: wireless communication link
- 214: vehicle heading information
- 300: system
- 301: backend server
- 302: cellular connection
- 303: control unit
- 304: Bluetooth connection
- 306: ultra-wide band connection
- 308: visual tracking information
- 400: vehicle information
- 402: vehicle intelligent assistant
- 404: device sensor information
- 500: user-specific task
- 502: ranging vision tracking
- 504: gaze of the user at the rear left window
- 506: intersection of eye gaze and vehicle interior
- 508: JSON command by the agent on the edge device
- 510: command is then sent
- 600: user drops a command
- 602: more information is needed to respond to the command
- 604: Bluetooth range
- 605: data request is then transformed in JSON
- 606: device agent
- 608: window at which the user was looking can be closed
- 700: user

- S1: method step "providing"
- S2: method step "acquiring"
- S3: method step "establishing"
- S4: method step "identifying"

## Claims

1. A method for a distance (200) and orientation (202) aware agent-to-agent communication between a first machine learning model (204) of a smart edge device (206) of a user and a second machine learning model (208) of a vehicle (210) associated with the user for aiding the user to resolve a user task associated with the vehicle (210), the method comprising the steps of:
providing (S1) an established wireless communication link (212) between the smart edge device (206) and the vehicle (210);
acquiring (S2) a distance (200) between the smart edge device (206) and the vehicle (210) and an orientation (202) of the smart edge device (206) with respect to the vehicle (210) using the established wireless communication link (212); and
establishing (S3) the agent-to-agent communication between the first machine learning model (204) and the second machine learning model (208) based on the acquired distance (200) and orientation (202) for aiding the user to resolve the user task associated with the vehicle (210).

2. The method according to claim 1, wherein the first machine learning model (204) consults the second machine learning model (208) for aiding the user to resolve the user task associated with the vehicle (210) in case that first meta information, in particular first sensor data of the vehicle, is available to the second machine learning model (308), which first meta information aids the first machine learning model (204) to resolve the user task associated with the vehicle (210), and/or wherein the second machine learning model (208) consults the first machine learning model (204) for aiding the user to resolve the user task associated with the vehicle (210) in case that second meta information, in particular second sensor data, is available to the first machine learning model (204), which second meta information aids the second machine learning model (208) to resolve the user task associated with the vehicle (210).

3. The method according to claim 1 or claim 2, wherein the user task associated with the vehicle (210) considers a user-specific question to be answered to the user about the vehicle (210) and/or about a vehicle (210) function executable based on the user task and/or about a part of the vehicle (210) and/or about an action performable with the vehicle (210) and/or the part of the vehicle (210) and/or about an item and/or an object and/or a subject of interest to the user with relation to the vehicle (210) and/or about a state of the vehicle (210) and/or the part of the vehicle (210) and/or the item and/or the object and/or the subject, and/or wherein the user task associated with the vehicle (210) considers a user-specific instruction of the user to be executed for the user about the vehicle (210) and/or about a vehicle function executable based on the user task and/or about a part of the vehicle (210) and/or about an action performable with the vehicle (210) and/or the part of the vehicle (210) and/or about an item and/or an object and/or a subject of interest to the user with relation to the vehicle (210) and/or about a state of the vehicle (210) and/or the part of the vehicle (210) and/or the item and/or the object and/or the subject.

4. The method according to any one of the preceding claims, wherein the acquiring (S2) the distance (200) between the smart edge device (206) and the vehicle (210) using the established wireless communication link (212) is done based on a cellular connection of the smart edge device (206) and the vehicle (210) and based on a geolocation of the vehicle (210) in case the distance is above a predefined threshold, preferably greater than approximately 20 meters, wherein the orientation (202) of the smart edge device (206) with respect to the vehicle (210) is determined based on vehicle heading information communicated to the smart edge device (206) via the cellular connection, and orientation information of the smart edge device (206).

5. The method according to claim 4, wherein the acquiring (S2) the distance (200) between the smart edge device (206) and the vehicle (210) using the established wireless communication link (212) is done based on a Bluetooth connection and an ultra-wide band connection between the smart edge device (206) and the vehicle (210) in case the distance (200) is equal to or below a predefined threshold, preferably equal to or lower than approximately 20 meters, wherein the orientation (202) of the smart edge device (206) with respect to the vehicle (210) is determined based on vehicle heading information, communicated to the smart edge device (206) via the Bluetooth connection, and orientation information of the smart edge device (206).

6. The method according to claim 4 or 5, wherein the acquiring (S2) the distance (200) between the smart edge device (206) and the vehicle (210) using the established wireless communication link (212) is done based on using visual tracking information of the vehicle (210) on the smart edge device (206) in case the vehicle (210) is in sight of the user wearing the smart edge device (206), wherein the orientation (202) of the smart edge device (206) with respect to the vehicle (210) is determined based on the visual tracking information, preferably optical flow information of a camera of the smart edge device (206).

7. The method according to any one of claims 4 to 6, wherein the smart edge device (206) performs the acquiring the distance (200) between the smart edge device (206) and the vehicle (210) and depending thereon, the orientation (202) of the smart edge device (206) with respect to the vehicle (210), in a multi layered approach that depends on the actual distance between the smart edge device (206) and the vehicle (210).

8. Method according to any one of claims 4 to 7, wherein the distance (200) acquired based on the geolocation has an accuracy of about 5 meters, and wherein the distance (200) acquired based on the ultra-wide band connection has an accuracy of about or lower than 10 centimeters, and wherein the distance (200) acquired based on the visual tracking information has an accuracy of about or lower than 1 centimeter.

9. Method according to any one of the preceding claims, wherein the first machine learning model (204) comprises a language model or a vision language model or an audio language model or an audio vision language model or a multimodal model or a physics informed language model and/or wherein the second machine learning model (208) comprises a language model or a vision language model or an audio language model or an audio vision language model or a multimodal model or a physics informed language model.

10. Method according to any one of the preceding claims, wherein the method further comprising, at least by the second machine learning model (308), identifying (S4) whether the user is an owner of the vehicle (210) using information about a vehicle identification and/or camera information, preferably face-recognition information and/or gesture recognition information, and/or fingerprint information, and wherein the establishing the agent-to-agent communication between the first machine learning model (204) and the second machine learning model (208) is also based on whether the user is the owner of the vehicle (210).

11. Method according to any one of the preceding claims, wherein the smart edge device (206) comprises a smart phone and/or a wearable and/or a smart glass and/or a smart pendant and/or a smart pin and/or a smart ring.

12. A system (300) for a distance and orientation aware agent-to-agent communication between a first machine learning model (204) of a smart edge device (206) of a user and a second machine learning model (208) of a vehicle (210) associated with the user for aiding the user to resolve a user task associated with the vehicle (210), the system (300) comprising the smart edge device (206), the vehicle (210), a vehicle backend server (301) connectable to the vehicle (210) and the smart edge device (206) and a control unit (303), wherein the smart edge device (206) and the vehicle (210) are connectable via the vehicle backend server (301) via an established wireless communication link (212); wherein the control unit (303) is configured for acquiring a distance (200) between the smart edge device (206) and the vehicle (210) and an orientation (202) of the smart edge device (206) with respect to the vehicle (210) using the established wireless communication link (212); and for establishing the agent-to-agent communication between the first machine learning model (204) and the second machine learning model (208) based on the acquired distance (200) and orientation (202) for aiding the user to resolve the user task associated with the vehicle (210).

13. The system according to claim 12, wherein the control unit (303) is included in the vehicle backend server (301), and wherein the vehicle backend server is preferably configured as a cloud service.

14. A computer program product comprising instructions which, when the method according to any one of claims 1 to 11 is executed by a computer, cause the computer to execute the method according to any one of claims 1 to 11.

15. A computer-readable medium on which the computer program product according to the preceding claim is stored.
